(19) Europäisches Patentamt European Patent Office Office européen des brevets

(11) EP 2 362 139 A1

(12) **EUROPEAN PATENT APPLICATION**

(43) Date of publication:
**31.08.2011 Bulletin 2011/35**

(51) Int Cl.:
***F23C 9/08*** *(2006.01)*   ***F23C 9/00*** *(2006.01)*
***F23D 14/24*** *(2006.01)*   ***F23D 14/56*** *(2006.01)*

(21) Application number: **10001658.3**

(22) Date of filing: **18.02.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **Haldor Topsoe A/S**
**2800 Lyngby (DK)**

(72) Inventors:
 • **Holm-Christensen, Olav**
  **3480 Fredensborg (DK)**

 • **Quas, John Mattias**
  **København Ø (DK)**
 • **Shah, Louise Jivan**
  **2950 Vedbæk (DK)**
 • **Norsk, Jesper**
  **3050 Humlebæk (DK)**

(74) Representative: **Grünecker, Kinkeldey,**
 **Stockmair & Schwanhäusser**
 **Anwaltssozietät**
 **Leopoldstrasse 4**
 **80802 München (DE)**

(54)   **Burner**

(57)   A burner (200) for a reforming reactor (100) and a reforming reactor (100) comprising same are disclosed. The burner (200) according to the present invention allows obtaining a uniform temperature distribution in the combustion chamber of the reactor. Moreover, the design of the burner according to the present invention allows preventing overheating of the refractory lining (140) and of the target tiles (120) of the reactor (100). The burner (200) according to the present invention is adapted to direct at least a portion of one of the gaseous flows to be input in the reactor so that it flows along the walls of the reactor (100) before reacting by means of combustion reactions.

FIG. 2

EP 2 362 139 A1

**Description**

FIELD OF THE INVENTION

The present invention relates to the field of burners. In particular, the present invention relates to the field of burners for reforming reactors. Still more in particular, the present invention relates to the field of burners suitable for secondary reforming reactors.

BACKGROUND OF THE INVENTION

Primary and secondary reforming reactors play a fundamental role in plants for the production of substances such as ammonia and methanol.

In the case of ammonia production, for instance, the goal of reforming is the production of a gas mixture of nitrogen and hydrogen in a 3 to 1 stoichiometric ratio starting from the raw materials of water, air and natural gas. The reactions by which this ratio is achieved are the following:

$$1)\ CH_4 + H_2O \leftrightarrow CO + 3H_2\ \text{(Methane reforming reaction)}$$

$$2)\ CH_4 + \frac{3}{2}O_2 \leftrightarrow 2H_2O + CO\ \text{(Combustion reaction)}$$

$$3)\ CO + H_2O \leftrightarrow CO_2 + H_2\ \text{(Water gas shift reaction)}$$

The methane reforming reaction is endothermic and occurs in the primary reformer. The combustion reaction, on the contrary, is exothermic and occurs, together with the methane reforming reaction and the water gas shift reaction, in the secondary reformer.

In more detail, in an ammonia plant, natural gas is firstly cleaned and mixed with steam. In a second stage, occurring in the primary reformer, methane and water are converted by means of the methane reforming reaction into hydrogen and carbon monoxide. The methane reforming reaction is, nevertheless, not completed in the primary reformer and results in a mixture of methane, water, carbon monoxide and hydrogen, generally referred to as process gas, being output by the primary reformer. Accordingly, a secondary reforming reaction (combustion reaction) is performed in the secondary reformer. In particular, air, or air enriched with oxygen, is added in the secondary reformer to the process gas output by the primary reformer. In this step, a process gas/air flame is formed, and the combustion of the oxidant produces temperatures around 1250°C which result in further reforming of the methane. The remaining carbon monoxide is converted by means of steam to carbon dioxide and hydrogen (water gas shift). The carbon dioxide and the excess steam are finally removed and the resulting mixture contains 25% nitrogen and 75% hydrogen which is the appropriate combination for the ammonia synthesis.

In methanol plants, secondary reforming is performed using pure oxygen instead of air in a reactor similar to a secondary reformer for ammonia plants by means of the so called autothermal reforming.

The process gas and the oxidant are introduced into the secondary reformer by means of a burner. In particular, the burner is designed so as to guarantee stable flames and high combustion intensities into the secondary reformer where heat requiring reactions occur.

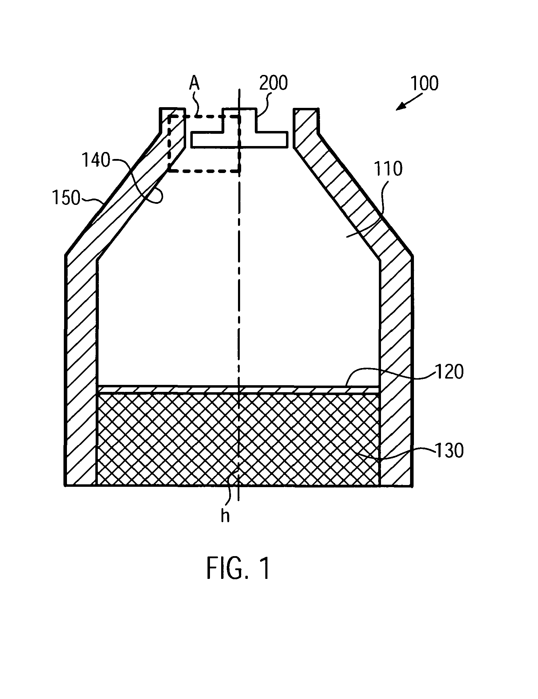

An example of a reforming reactor suitable for secondary reforming is schematically shown in cross section in Figure 1. The reforming reactor 100 is enclosed by the pressure shell 150 and it is provided with an upper opening adapted to house at least the end portion of a burner 200. The process gas and the oxidant are supplied into the combustion chamber 110 of the reactor 100 by means of the burner 200. The combustion reaction occurs in the combustion chamber 110 where the heat necessary for the reactions is produced. Accordingly, in order to optimize the design of the combustion chamber 110, the sidewalls of the chamber are covered by refractory lining 140. The combustion chamber 110 is divided from the catalyst bed 130 of the reactor by means of target tiles 120. In particular, the target tiles 120 are placed above the catalyst bed 130 to protect the catalysts from being churned by the stream of the gases entering the combustion chamber 110 from the burner 200. The gases flow through the catalyst bed 130 and the products of the reactions are collected from the bottom of the reactor (not shown in the figure). The reactor 100 shown in Figure 1 is cylindrical symmetric around the symmetry axis h.

In order to optimize the design of the reformer, a crucial role is played by the design of the burner.

In particular, a critical parameter for satisfactory secondary reformer performance is the efficient mixing of the process gas and the oxidant. Uneven mixing can result, in fact, in large temperature variations above and into the catalyst bed causing variations in the degree of reforming achieved and often yielding a poor overall reforming equilibrium. In these cases, even if the catalyst is extremely active, the course of the reaction is not optimized and the uneven mixing may result in large reactants residuals. The efficiency of gas mixing is primarily a function of the burner design.

In addition to causing inefficient gas mixing, a poorly designed burner can damage the reactor walls, the refractory lining, the target tiles or even the burner itself, when there is impingement of hot gases and/or flames in these areas. If, for instance, large areas of the burner are exposed to flames for prolonged time, the lifetime of the burner is strongly reduced.

Moreover, the flames formed by the burner must be kept away from the refractory lining of the sidewalls of the combustion chamber and from the ceramic tiles covering the catalyst bed. Overheating of these parts is not only responsible for the damaging and the reduction of the lifetime of the reactor, but also for the evaporation of alumina from these parts. Alumina evaporation leads to ruby formation in the catalyst thus poisoning it and lowering its activity. Ruby formation can thus cause a pressure drop in the reactor and the necessity for an early shutdown of the reactor to prevent bypass of hot gas along the pressure shell. Accordingly, one of the main challenges in the design of burners for reforming reactors is the minimization of the volume occupied by the flames without affecting, at the same time, the provision of the necessary heat for the reactions to occur.

Another problem concerning the design of burners for reforming reactors is the temperature distribution inside the reactor. In particular, it is desirable to obtain a temperature distribution as uniform as possible. The product yield highly depends, in fact, on the temperature distribution in the catalyst bed. As already explained above with respect to the problem of the inefficient gas mixing, a non-uniform temperature distribution in the reactor causes variations in the degree of reforming achieved and often yields a poor overall reforming equilibrium.

It is therefore the object of the present invention to provide a burner that provides an improved temperature distribution in the reactor.

This object is achieved with the burner according to claim 1. The burner comprises a first input for receiving a first gaseous flow, in particular an oxidant, a second input for receiving a second gaseous flow, in particular a process gas, and an end portion for communication with the first input and the second input, wherein the end portion is adapted to supply the first gaseous flow and the second gaseous flow into a reactor, wherein the end portion is further adapted to direct at least a part of the second gaseous flow such that said part of the second gaseous flow flows along the walls of the reactor. The burner according to the present invention is based on the inventive concept of allowing at least a portion of one of the gaseous flows to be input into the reactor to move downward along the walls of the burner before reacting by means of combustion reactions. Accordingly, the walls of the burner are kept in contact with a gaseous flow having a lower temperature. In the case of secondary reforming, the burner according to the present invention is adapted to direct at least a portion of the process gas output by the primary reformer so that it flows along the walls of the reactor before reacting with the oxidant.

According to a further embodiment of the present invention, the end portion of the burner can be substantially cylindrically symmetric around the symmetry axis and it can be adapted to direct at least a part of the flow of the second gaseous flow in an outward direction with respect to the direction of the symmetry axis. Therefore, the burner is easy to design and to manufacture.

According to a further embodiment of the present invention the end portion of the burner can comprise swirling means so as to allow the first gaseous flow and/or the second gaseous flow to flow into the reactor in a swirl flow mode so as to optimize the mixing of the two gaseous flows. Accordingly, the mixing of the two gaseous flows can be improved. Moreover, a higher yield of the reactions can be achieved. According to a further embodiment of the present invention, a burner is provided wherein the second input can be connected to the end portion of the burner by means of an outer duct, in particular cylindrical, and the first input can be connected to the end portion by means of an inner duct, in particular cylindrical and/or coaxial with the outer duct. With this simple design, the desired gas flow properties can be achieved. Moreover, the burner can be easily integrated into pre-existing plants.

According to still a further embodiment of the present invention, the cross section of the inner duct can comprise an enlarged region towards its extremity facing the reactor. Accordingly, the contact between the flames and the burner is minimized so as to prolong the lifetime of the burner.

According to a further embodiment of the present invention the enlarged region of the end portion can comprise a first portion adjacent to the inner duct, said first portion having substantially a frusto-conical shape. Accordingly, the gaseous flow flowing along the outer surface of the end portion is effectively directed towards the walls of the reactor the burner is applied to. Thereby further the temperature distribution within the reactor is further optimized which improves its lifetime.

According to still a further embodiment of the present invention, the enlarged region can further comprise a second portion adjacent to the first portion at its extremity toward the reactor, said second portion being substantially cylindrical. Accordingly the gaseous flow flowing along the inner surface of the end portion is kept at a distance from the side walls of the reactor the burner is applied to. This allows reducing the contact between the flame and the sidewalls of the reactor thus further preventing the overheating and the damaging of same.

According to a further embodiment of the present invention, the end portion can comprise a wall element adapted to partially occlude the inner duct toward the reactor. Accordingly, the target tiles provided above the catalyst bed of the reactor are not overheated by the flow of the gaseous flow flowing through the inner duct and the evaporation of alumina is minimized. In particular, the wall element partially occluding the inner duct toward the reactor allows the flow of the gaseous flow flowing through the inner duct to be input in the reactor through a limited portion of the inner duct thus confining the flames and preventing the target tiles placed at the bottom of the combustion chamber in front of the inner duct to be overheated. Moreover, the wall element partially occluding the inner duct toward the reactor contributes to direct the recirculation of gases in the combustion chamber.

According to a further embodiment of the present invention, the extremities of the wall element can be bended such that they protrude into the reactor to form a substantially ring shaped channel together with the enlarged region of the inner duct, said ring shaped channel being adapted to input the first gaseous flow into the reactor. Accordingly, a more uniform distribution of the flames and thus of the temperature is obtained inside the reactor.

According to a further embodiment of the present invention, the enlarged region can further comprise a guiding wall protruding into the reactor further than the wall element, the guiding wall being adapted to direct the second gaseous flow toward the walls of the reactor. Accordingly, the gaseous flow flowing along the outer surface of the end portion is directed towards the walls of the reactor the burner is applied to. This allows reducing the heating effect of the sidewalls of the reactor.

According to a further embodiment of the present invention, the guiding wall can | comprise a portion of a substantially frusto-conical shape.

According to a further embodiment of the present invention, the end portion of the burner comprises an outer slit adapted to supply the second gaseous flow into the reactor and an inner slit adapted to supply the first gaseous flow into the reactor, wherein the outer slit surrounds the inner slit so as to direct at least a part of the second gaseous flow such that said part of the second gaseous flow flows along the walls of the reactor. Accordingly, the second gaseous flow flowing into the reactor from the outer slit is directed toward the walls of the reactor by the flow of the first gaseous flow flowing into the reactor from the inner slit.

According to a further embodiment of the present invention, the width of the outer slit is larger than the width of the inner slit. Accordingly, a part of the second gaseous flow flowing into the reactor from the outer slit directly reacts with the first gaseous flow flowing into the reactor from the inner slit and another part of the second gaseous flow is directed toward the walls of the reactor.

According to still a further embodiment of the present invention the end portion can comprise a plurality of pipes in communication with the first input so as to supply the first gaseous flow into the reactor via the plurality of pipes. Accordingly, the volume of the combustion chamber occupied by the flames is limited to the extremities of the plurality of pipes thereby protecting the sidewalls of the reactor.

According to a further embodiment of the present invention, the pipes can be arranged adjacent to each other on a closed curve. Thereby the yield of the process can be improved as the combustion can take place in an optimized volume within the reactor.

According to still a further embodiment of the present invention, toward their extremities the pipes can be bent toward the wall of the reactor so as to allow at least a part of the first gaseous flow to flow toward the part of the second gaseous flow flowing along the walls of the reactor. Accordingly, the mixing of the two gaseous flows is improved. Moreover, a higher yield of the reactions can be observed.

According to a further embodiment of the present invention, the pipes can be bent so as to allow the first gaseous flow to flow into the reactor in a swirl flow mode. Accordingly the mixing of the two gaseous flows is further optimized and the yield of the reactions is further increased.

According to a further embodiment of the present invention, the pipes can be further bent toward their extremities inwardly with respect to the first bent region. Accordingly, the flames are kept at a distance from the side walls of the reactor so as to prevent overheating and damaging of same.

According to a further embodiment of the present invention, the end portion can further comprise a guiding wall adapted to protrude into the reactor, the guiding wall being arranged between the plurality of pipes and the output of the second gaseous flow so as to surround the plurality of pipes and to direct the flow of the second gaseous flow along the outer surface of the guiding wall. Accordingly, the gaseous flow flowing along the outer surface of the guiding wall is directed towards the walls of the reactor the burner is applied to. This allows avoiding overheating of the sidewalls of the reactor.

According to still a further embodiment of the present invention, a reforming reactor according to claim 15 is provided.

Preferred embodiments of the invention and their features and properties will be described in the following to illustrate the inventive concept in relation to the following figures:

Figure 1 schematically displays a cross section of a reforming reactor comprising a burner;

Figure 2 schematically displays a three dimensional view of a burner according to an embodiment of the present invention;

Figure 3 schematically displays a cross section of a fraction of the end portion of a burner according to an embodiment of the present invention in the area A shown in Figure 1;

Figure 4 schematically shows a three dimensional view of an end portion of a burner according to an embodiment of the present invention;

Figure 5 schematically displays a three dimensional view of an end portion of a burner according to a further embodiment of the present invention;

Figure 6 schematically shows a cross section of a fraction of the end portion of a burner according to a further embodiment of the present invention in the area A shown in Figure 1;

Figure 7 schematically displays a cross section of a fraction of the end portion of a burner according to a further embodiment of the present invention in the area A shown in Figure A;

Figure 8 schematically displays three dimensional views of the end portions of a burner according to several embodiments of the present invention.

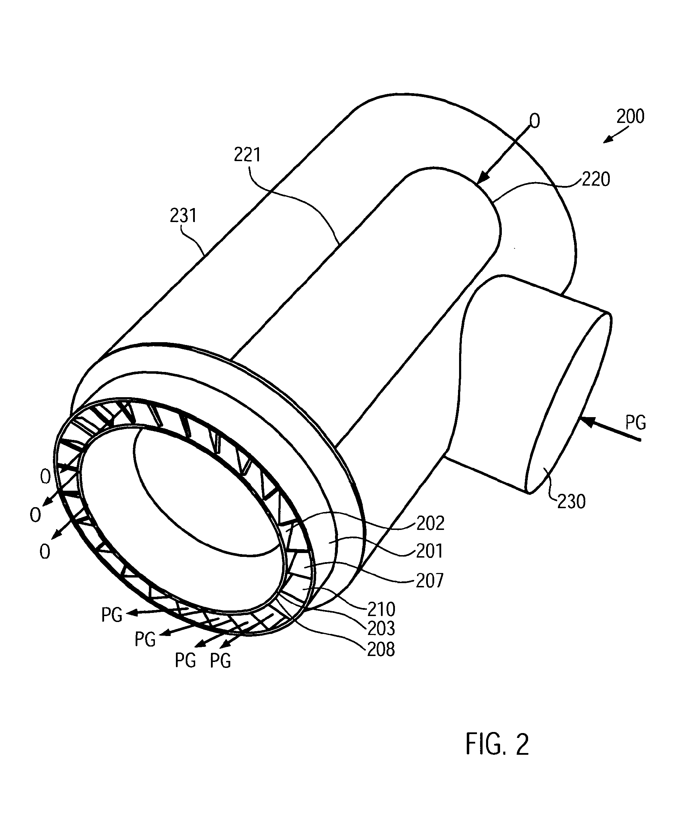

In the following, the present invention is described with reference to particular embodiments as shown in the enclosed drawings. In the figures, for simplicity, corresponding parts or elements are indicated by the same reference numbers. Figure 2 schematically displays a three dimensional view of a burner according to an embodiment of the present invention.

The burner comprises a first input 220 for receiving a first gaseous flow O, in particular an oxidant, and a second input 230 for receiving a second gaseous flow PG, in particular a process gas. The first input 220 could for instance communicate with a first gaseous flow supply such as an air supply, an oxygen supply, an oxygen-enriched air supply and so on. The second input 230 could for instance communicate with the output of a primary reforming reactor.

The burner 200 further comprises an end portion adapted to supply the first gaseous flow O and the second gaseous flow PG into a reactor. With reference for instance to the schematic representation of a reforming reactor of Figure 1, the end portion of the burner 200 could be adapted to be housed in the upper opening of the reactor 100.

The first input 220 of the burner 200 shown in Figure 2 is connected to the end portion by means of an inner duct 221 which is cylindrical. The second input 230 is connected to the end portion by means of an outer duct 231 which is also cylindrical. Moreover, the inner duct 221 is coaxial with the outer duct 231.

The end portion of the burner 200 shown in Figure 2 comprises an outer wall 201, substantially cylindrical and an intermediate wall 202 substantially cylindrical and arranged inside the outer wall 201 so as to be coaxial and to form an external annular output region in communication with the second input 230 so as to be adapted to supply the second gaseous flow PG into the reactor. Moreover, the end portion further comprises an inner wall 203 substantially cylindrical and arranged inside the intermediate wall 202 so as to be coaxial and to form an internal annular output region in communication with the first input 220 so as to be adapted to supply said first gaseous flow O into the reactor.

According to this embodiment, the second gaseous flow PG input into the reactor from the external annular output region formed between the walls 201 and 202 is directed so as to flow along the sidewalls of the reactor. The first gaseous flow O, on the contrary, is input into the reactor from the internal annular output region formed between the walls 202 and 203. In particular, the external annular output region formed between the walls 201 and 202 defines at its extremity toward the reactor an outer slit 207 adapted to supply the second gaseous flow PG into the reactor. Moreover, the internal annular output region formed between the walls 202 and 203 defines at its extremity toward the reactor an inner slit 208 adapted to supply the second gaseous flow O into the reactor. The outer slit 207 surrounds the inner slit 208 so as to direct at least a part of the second gaseous flow PG such that said part of the second gaseous flow PG flows along the walls of the reactor. In particular, in the embodiment shown in Figure 2, the outer slit 207 and the inner slit 208 have a circular shape and are concentric. Moreover, the outer slit 207 and the inner slit 208 are centered on the symmetry axis of the system, and the outer slit 207 is situated farther from the centre than the inner slit 208.

The second gaseous flow PG flowing into the reactor from the outer slit 207 is directed toward the walls of the reactor by the flow of the first gaseous flow O flowing into the reactor from the inner slit 208.

The flames develop, accordingly, along the inner slit 208 and are therefore confined in a fraction of the volume of the combustion chamber of the reactor away from the sidewalls of the reactor.

Moreover, as can be seen in figure 2, the distance between the wall 201 and the wall 202 is higher than the distance between the wall 202 and the wall 203. Accordingly, the width of the outer slit 207 is larger than the width of the inner slit 208.

In other words, the external annular region providing the second gaseous flow PG is wider than the internal annular region providing the first gaseous flow O. Accordingly, a small fraction of the flow of the incoming second gaseous flow PG directly reacts with the first gaseous flow O at the time of the input into the reactor (primary combustion) while a large fraction of the second gaseous flow PG is forced to first flow downward along the sidewalls of the reactor and then to recirculate upward along the centre axis of the system so as to react with the incoming second gaseous flow O (secondary combustion). The fraction of second gaseous flow PG flowing downward along the sidewalls of the reactor allows protecting the sidewalls from the flame developed along the internal annular output region and, therefore, keeping the temperature of the sidewalls and of the refractory lining applied thereon low. Moreover, this design allows obtaining uniform temperature distributions in the reactor.

According to particular embodiments of the present invention, the ratio of the width of the outer slit 207 to the width of the inner slit 208 may range from 3 to 15.

As can be seen from Figure 2, the external annular output region comprised between the outer wall 201 and the intermediate wall 202 is provided with swirling means 210 so as to allow the second gaseous flow PG to flow into the reactor in a swirl flow mode. The swirling means 210 shown in Figure 2 comprise a plurality of swirl blades arranged along the area of the external annular output region. The swirl blades could be fixed by fixing means either to the inner surface of the outer wall 201, or to the outer surface of the intermediate wall 202 or to both. Alternatively, the swirler blades could be integrally formed with at least one of said outer wall 201 or said intermediate wall 202. The pitch angle of the swirler blades is comprised between 15° and 75°, preferably between 30° and 60°.

The presence of the swirling means 210 allows for an efficient mixing of the second gaseous flow PG and the first gaseous flow O by increasing the area of their contact thus further contributing to the uniformity of the temperatures distribution in the reactor. In particular, the swirl blades shown in Figure 2, force at least a fraction of the second gaseous flow PG to flow downward along the sidewalls of the reactor following a substantially spiral path.

The inner annular region formed between the intermediate wall 202 and the inner wall 203 could also be provided with swirling means so as to allow the first gaseous flow O to flow in a swirl flow mode in the reactor.

The burner 200 shown in figure 2 is substantially cylindrically symmetric around a symmetry axis.

Advantageously, the burner 200 is adapted to be housed into a reactor 100 so that the symmetry axis h of the reactor substantially coincides with the symmetry axis of the burner 200.

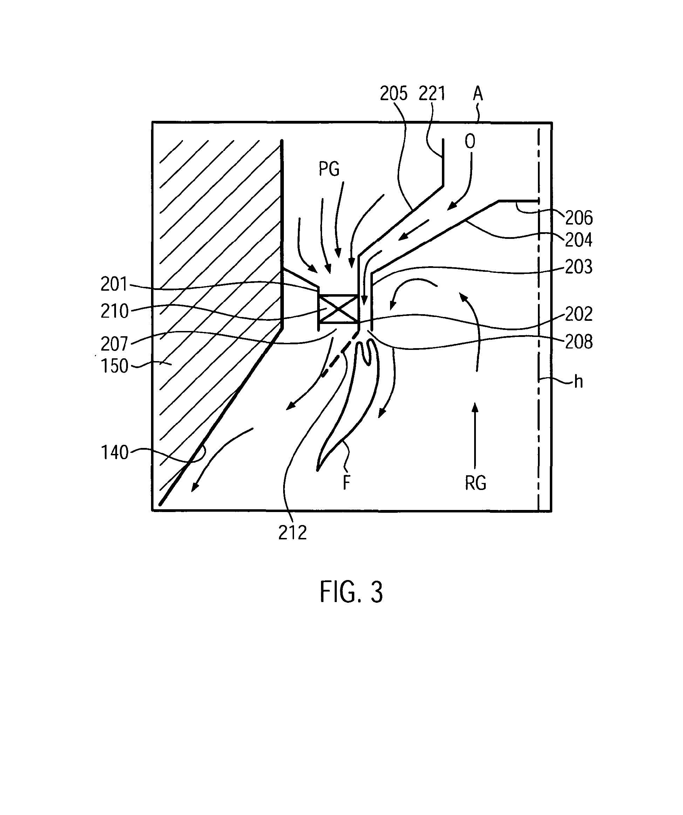

Figure 3, schematically shows a cross section of a fraction of the end portion of the burner shown in Figure 2 in the area A shown in Figure 1.

The end portion of the burner is housed in the upper opening of the reactor 100 whose pressure shell 150 and refractory lining 140 are visible on the left in the figure.

As can be seen from Figure 3, the cross section of the inner duct 221 supplying the first gaseous flow O comprises an enlarged region toward its extremity facing the reactor 100. The enlarged region comprises a first portion 205 adjacent the inner duct 221 and having substantially a frusto conical shape. The enlarged region further comprises a second portion adjacent the first portion 205 at its extremity toward the reactor. The second portion, which is substantially cylindrical, defines the intermediate wall 202 shown in Figure 1.

As can be seen in the figure, the second gaseous flow PG flows along the outer surfaces of the adjacent parts 221, 205 and 202 shown in figure 3. The first gaseous flow O flows along the inner surfaces of the adjacent parts 221, 205 and 202.

The end portion of the burner 200 further comprises a wall element 206 adapted to partially occlude the inner duct 221 toward the reactor. The extremities 204 of the wall element 206 are bent so as to protrude into the reactor to form a substantially ring shaped channel together with the enlarged region of the inner duct 221. In particular, the extremities 204 of the wall element 206 form, together with the first portion 205 of the enlarged region of the inner duct 221, a channel for guiding the flow of the first gaseous flow O toward the reactor. The inner wall 203 shown in Figure 3 is adjacent the extremities 204 of the wall element 206. Accordingly, the first gaseous flow O flows from the channel formed by the elements 204 and 205 to the inner annular region formed between the walls 202 and 203 and finally into the reactor.

Figure 3 further displays the outer wall 201 forming, together with the intermediate wall 202, the outer annular region adapted to input the second gaseous flow PG into the reactor. Moreover, the outer annular region is provided with swirling means 210. Accordingly, the second gaseous flow PG flows into the reactor in a swirl flow mode.

A first fraction of the incoming flow of the second gaseous flow PG reacts with the first gaseous flow O giving rise to the flame F shown in the figure (primary combustion). Moreover, a second fraction of the incoming flow of the second gaseous flow PG flows downstream along the refractory lining 140 covering the side walls of the reactor 100 and recirculates upstream along the central region of the reformer (arrows RG in the figure). The recirculating gas RG reacts with the first gaseous flow O in correspondence of the flame F (secondary combustion).

According to this design, the gas flowing downward along the sidewalls of the reactor is at a lower temperature than the gas flowing upward along the central region of the combustion chamber. Accordingly, the sidewalls and the refractory lining 140 covering them are maintained at low temperatures. Moreover, the flame F is separated from the refractory lining 140 from a layer of incoming second gaseous flow PG at low temperature.

The recirculation of gases in the combustion chamber of the reactor is driven also by the wall element 206 partially occluding the inner duct 221 toward the reactor. The wall element 206 may be flat with bent extremities 204 as shown in figure 3, or, according to alternative embodiments of the invention, it may exhibit a dome-like shape or a cone shape so as to further improve the efficiency of the recirculation of the gases in the combustion chamber.

Additionally, the system shown in Figure 3 may further comprise a guiding wall 212 (shown by the dashed line in the figure) adjacent the intermediate wall 202 and protruding into the reactor further than the inner wall 203. The guiding wall 212 may comprise a substantially frusto conical shape. The guiding wall 212 is adapted to direct the flow of the second gaseous flow PG along the refractory lining 140. Moreover, the guiding wall 212 is further adapted to maintain the flame F at a safe distance from the refractory lining 140. The presence of the guiding wall 212 contributes to the optimization of the circulation of gases into the combustion chamber of the reactor and to the balance between the primary combustion of the incoming second gaseous flow PG and the secondary combustion of the recirculating gases RG. In particular, the presence of the guiding wall 212 as shown in Figure 3 contributes to lower the fraction of the incoming second gaseous flow PG reacting by primary combustion with the first gaseous flow O and to, accordingly, increase the fraction of second gaseous flow PG reacting by secondary combustion with the first gaseous flow O after recirculation in the combustion chamber.

The design of the burner as shown in Figures 2 and 3 has proven to be particularly advantageous. In particular, even if the temperature of the flame is around 2250 °C, the temperature in the volume of the combustion chamber is substantially constant over the entire volume and it is comprised between 1300° C and 1400 °C. Moreover, the design of the burner as shown in Figures 2 and 3 is simple and, accordingly, inexpensive to manufacture.

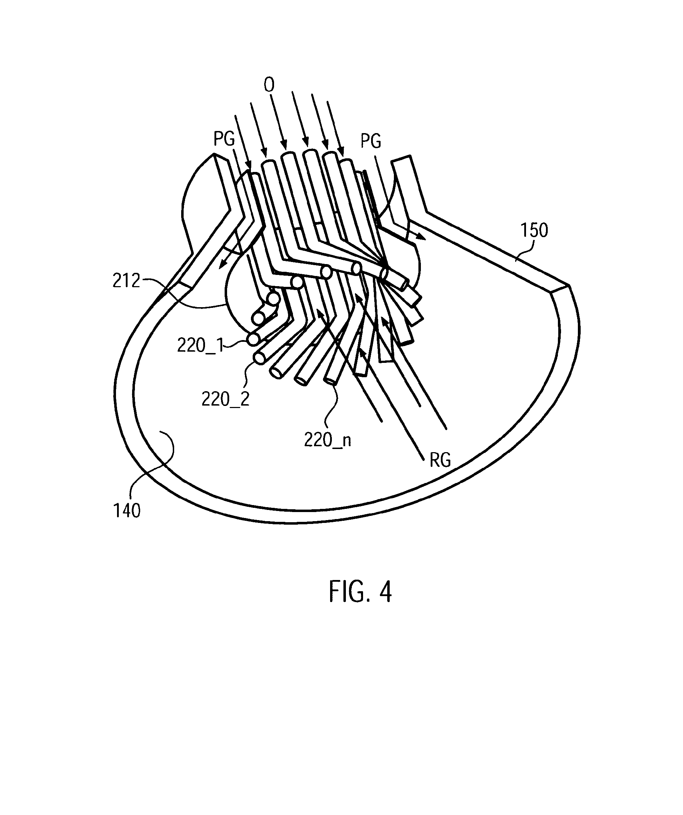

Figure 4 schematically displays a three dimensional view of a further embodiment of the present invention. In particular, Figure 4 displays the end portion of a burner 200 comprising a plurality of pipes 220_1, 220_2, 220_n arranged on a closed curve. Each of the pipes of the plurality of pipes 220_n is adapted to input the first gaseous flow O into the reactor.

The system further comprises a guiding wall 212 surrounding the plurality of pipes 220_n and comprising a frusto-conical portion adapted to protrude into the reactor.

At least a part of the incoming flow of the second gaseous flow PG is accordingly forced to flow downward along the outer surface of the guiding wall 212 so as to flow along the refractory lining 140 of the reactor. The recirculating gas RG flows upward along the central region of the reactor.

Each of the pipes of the plurality of pipes 220_n is bent toward the wall of the reactor 100 so as to allow at least a part of the first gaseous flow O output by each of the pipes 220_n to flow toward the part of second gaseous flow PG flowing along the walls of the reactor 100 so as to optimize the efficiency of the mixing of the two flows and to allow at least a portion of the second gaseous flow PG to react with the second gaseous flow O by means of the primary combustion. The recirculating gas RG is directed towards the extremities of the plurality of pipes 220_n so as to react by means of the secondary combustion. The arrangement of the plurality of pipes 220_n on a closed curve contributes to driving the flow of the recirculating gas RG towards the extremities of the pipes 220_n.

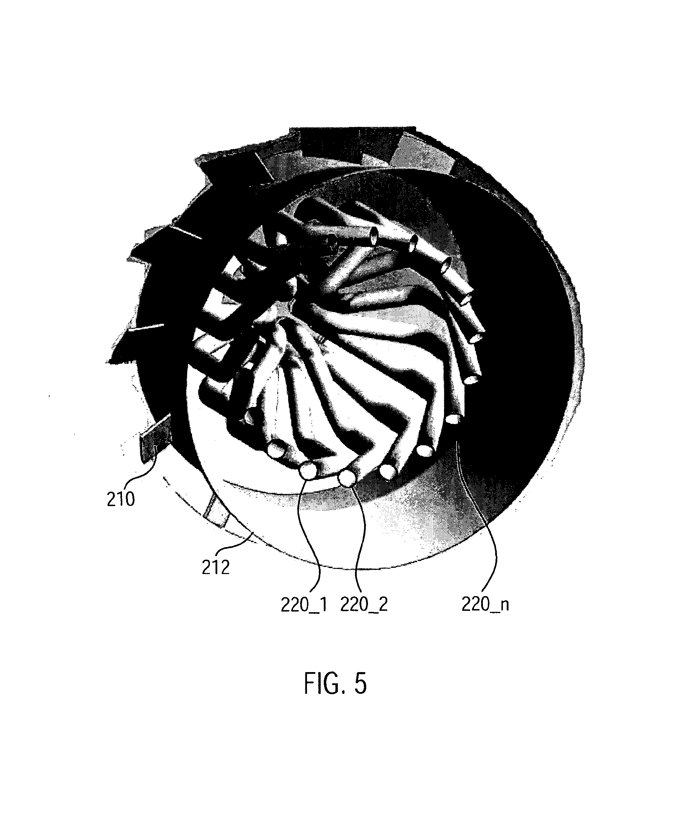

Each of the pipes 220_n of the plurality of pipes may be further bent so as to allow the first gaseous flow O to flow into the reactor in a swirl-flow mode as shown for instance in Figure 5. The first gaseous flow O output by the extremities of the pipes 220_n is forced to flow downward in the reactor following a substantially spiral path. As explained above, this improves the efficiency of the mixing of the first gaseous flow O with the second gaseous flow PG.

Moreover, as shown in Figure 5, toward their extremities, the pipes 220_n are further bent inwardly with respect to the first bent region. Accordingly, the flames developed at the extremity of the pipes 220_n are kept at a distance from the sidewalls of the reactor.

The guiding wall 212 of the embodiments shown in Figure 4 and Figure 5, may be further provided with swirling means as schematically shown in Figure 5.

In particular, Figure 5 displays that the guiding wall 212 is further provided with a plurality of swirl blades 210 for allowing the second gaseous flow PG to enter the reactor in a swirl flow mode. The swirl blades 210 are disposed along the outer surface of the guiding wall 212. The swirl blades may be fixed by means of fastening means to the outer surface of the guiding wall 212 or they can be integrally formed thereon.

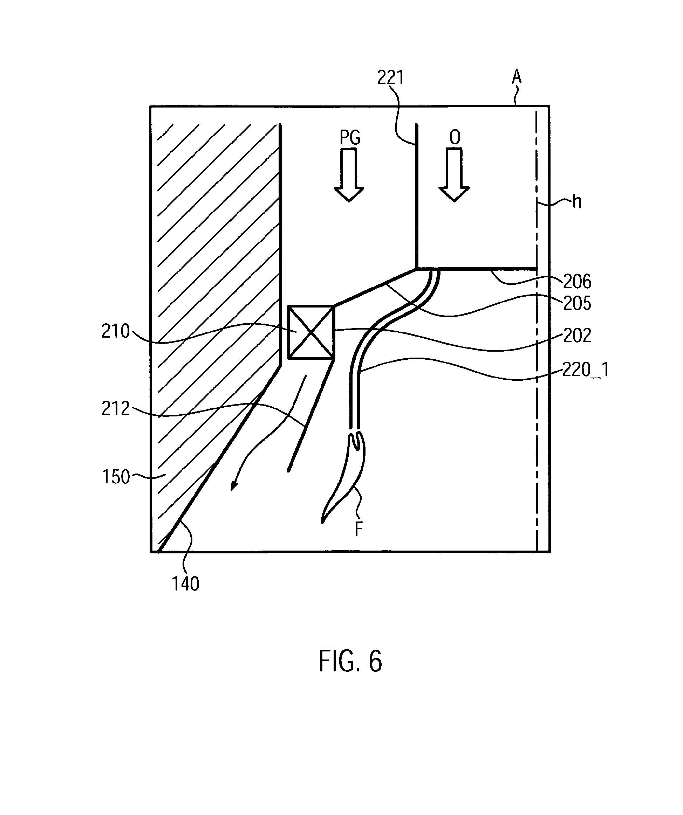

Figure 6 schematically displays a cross section of the end portion of the burner shown in Figure 5 in the area A displayed in Figure 1.

The end portion of the burner is housed in the upper opening of the reactor 100 whose pressure shell 150 and refractory lining 140 are visible on the left in the figure.

The figure shows one of the bent pipes (bent pipe 220_1) adapted to provide the first gaseous flow O into the reactor. In particular, the bent pipe 220_1 is in communication with the inner duct 221. Still more in particular, the bent pipe 220_1 is applied to the wall element 206 adapted to partially occlude the inner duct 221.

Moreover, the system is provided with the guiding wall 212 interposed between the pipe 220_1 and the refractory lining 140 of the reactor. In particular, the guiding wall 212 is adapted to protrude into the reactor so as to force the second gaseous flow PG to flow along the outer surface of the guiding wall 212 and to accordingly direct it along the sidewalls of the reactor. The guiding wall 212 is connected to the inner duct 221 by means of the wall elements 202 and 205.

The second gaseous flow PG recirculates in the combustion chamber and flows upward in the central region of the chamber so as to react with the first gaseous flow output at the extremity of the bent pipe 220_1 where the flame F develops (secondary combustion). In particular, according to this design, only a fraction of the second gaseous flow PG reacts by primary combustion with the second gaseous flow O because the guiding wall 212 substantially prevents the incoming flow of the second gaseous flow PG to come in contact with the first gaseous flow O output by the pipe 220_1. A large portion of the flow of the second gaseous flow PG reacts with the first gaseous flow O only after recirculation in the combustion chamber.

The system further comprises swirling means 210 adapted to allow the second gaseous flow PG to enter the reactor in a swirl flow mode. In particular, in the example shown in Figure 6, the swirling means 210 are applied to the wall element 202 connecting the guiding wall 212 to the inner duct 221.

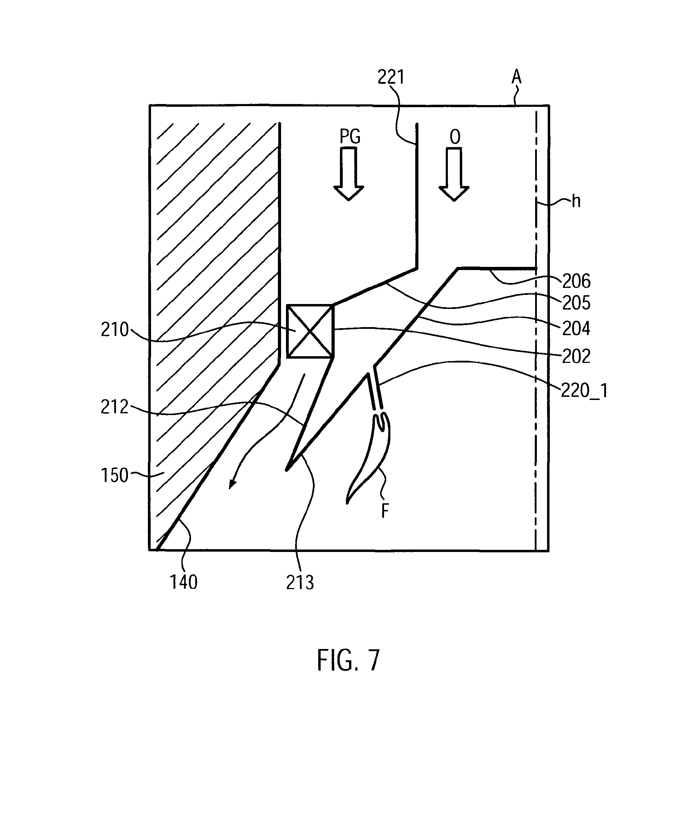

Figure 7 schematically displays a cross section of a further embodiment of the present invention in the area A displayed in Figure 1. In the embodiment shown in figure 7, the pipe 220_1 is applied to the bent extremities 204 of the wall element 206 adapted to partially occlude the inner duct 221.

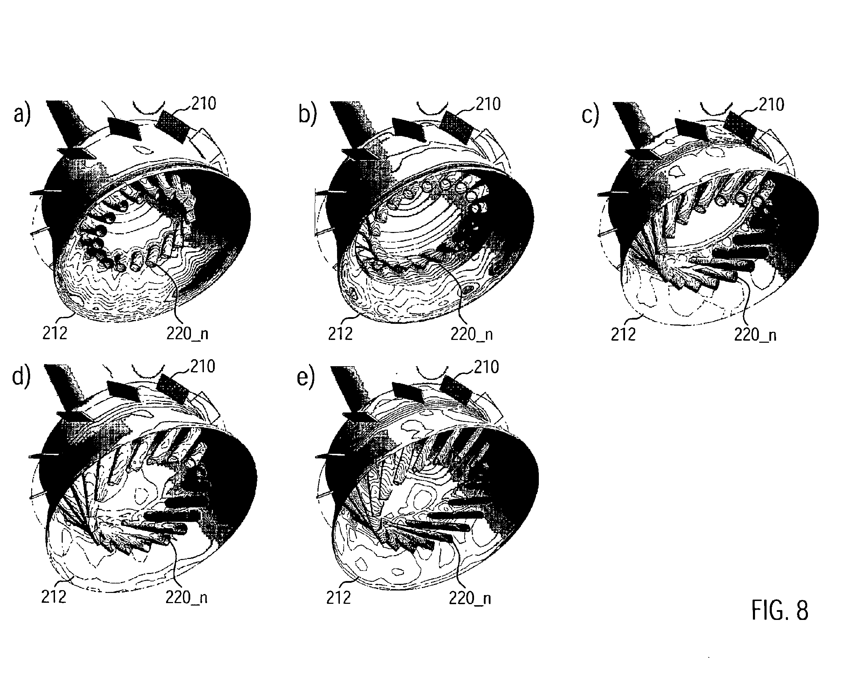

The plurality of pipes 220_n may be bent and tilted according to several configurations, in particular according to several bending and tilting angles. Figure 8 displays for instance several embodiments according to the present invention wherein the plurality of pipes 220_n are arranged on a closed curve and tilted and/or bent according to several angles. In Figures 8a and 8b the pipes are curved toward the wall of the reactor so as to allow at least a part of the first gaseous flow O to flow toward the part of the second gaseous flow PG flowing along the walls of the reactor. In figures 8c - 8e the pipes are straight but they are tilted according to various angles with respect to the plane formed by the closed curve along which the pipes are arranged. In each case the system comprises a guiding wall 212 provided with swirling means 210 for allowing the second gaseous flow PG to flow into the reactor in a swirl flow mode.

The design of the burner as shown in Figures 4 to 8 allows obtaining a uniform temperature distribution in the volume of the combustion chamber of the reactor. In particular, even if the temperature of the flame is around 2250 °C, the temperature in the volume of the combustion chamber is substantially constant over the entire volume and it is comprised between 1300° C and 1400 °C.

The burner according to the present invention allows obtaining a uniform temperature distribution in the combustion chamber of the reactor. In particular, the flames are confined in a small fraction of the volume of the chamber. The refractory lining and the target tiles are not overheated and the alumina evaporation is minimized. Moreover, the lifetime of the reactor is prolonged because the flames are not in contact with any part of the reactor. The surfaces of the burner in contact with flames are also minimized so that the lifetime of the burner itself is also optimized. Furthermore, the flow of gases into the reactor is optimized and the efficiency of the mixing of the gases is improved with respect to previous designs. Accordingly, the yield of the reforming reactions performed by means of the burner of the present invention is high.

The various embodiments and/or individual features thereof can also be combined in any combination to provide further advantageous realisations of the invention,

**Claims**

1. Burner (200) for a reforming reactor, said burner (200) comprising a first input (220) for receiving a first gaseous flow (O), in particular an oxidant, a second input (230) for receiving a second gaseous flow (PG), in particular a process gas, and an end portion in communication with said first input (220) and said second input (230), said end portion being adapted to supply said first gaseous flow (O) and said second gaseous flow (PG) into the reactor (100), wherein said end portion is further adapted to direct at least a part of the second gaseous flow (PG) such that said part of the second gaseous flow (PG) flows along the walls of the reactor (100).

2. Burner according to claim 1, wherein said end portion is substantially cylindrically symmetric around a symmetry axis (h) and said end portion is adapted to direct at least a part of the flow of said second gaseous flow (PG) in an outward direction with respect to the direction of said symmetry axis (h).

3. Burner according to one of claims 1 or 2, wherein said end portion comprises swirling means (210) so as to allow said first gaseous flow (O) and/or said second gaseous flow (PG) to flow into the reactor (100) in a swirl-flow mode.

**4.** Burner according to one of claims 1 to 3, wherein said second input (230) is connected to said end portion by means of an outer duct (231), in particular cylindrical, and said first input (220) is connected to said end portion by means of an inner duct (221), in particular cylindrical and/or coaxial with said outer duct (231).

**5.** Burner according to one of claims 1 to 4, wherein the cross section of the inner duct (221) comprises an enlarged region toward its extremity facing the reactor (100).

**6.** Burner according to claim 5, wherein said enlarged region comprises a first portion (205) adjacent said inner duct (221), said first portion (205) having substantially a frusto conical shape.

**7.** Burner according to claim 6, wherein said enlarged region further comprises a second portion (202) adjacent said first portion (205) at its extremity toward the reactor, said second portion (202) being substantially cylindrical.

**8.** Burner according to one of claims 1 to 7, wherein said end portion comprises a wall element (206) adapted to partially occlude the inner duct (221) toward the reactor (100).

**9.** Burner according to claim 8 when dependent on one of claims 5 to 7,
wherein the extremities (204) of said wall element (206) are bent such that they protrude into said reactor to form a substantially ring shaped channel together with the enlarged region of the inner duct (221), said ring shaped channel being adapted to input said first gaseous flow (O) into the reactor (100).

**10.** Burner according to claim 9, wherein the enlarged region further comprises a guiding wall (212) protruding into the reactor (100) further than said wall element (206), said guiding wall (212) being adapted to direct said second gaseous flow (PG) toward the walls of said reactor (100).

**11.** Burner according to one of claims 1 to 10, wherein said end portion comprises an outer slit (207) adapted to supply said second gaseous flow (PG) into the reactor and an inner slit (208) adapted to supply said first gaseous flow (O) into the reactor, wherein said outer slit (207) surrounds said inner slit (208) so as to direct at least a part of the second gaseous flow (PG) such that said part of the second gaseous flow (PG) flows along the walls of the reactor (100).

**12.** Burner according to claim 11, wherein the width of the outer slit (207) is larger than the width of the inner slit (208).

**13.** Burner according to one of claims 1 to 12, wherein said end portion comprises a plurality of pipes (220_n) in communication with said first input (220) so as to supply said first gaseous flow (O) into the reactor (100) via the plurality of pipes (220_n).

**14.** Burner according to claim 13, wherein said end portion further comprises a guiding wall (212) adapted to protrude into said reactor (100), said guiding wall (212) being arranged between said plurality of pipes (220_n) and the output of said second gaseous flow (PG) so as to surround said plurality of pipes (220_n) and to direct the flow of said second gaseous flow (PG) along the outer surface of the guiding wall (212).

**15.** A reforming reactor comprising a burner (200) according to one of claims 1 to 14 and a reactor (100).

FIG. 1

FIG. 2

FIG. 3

FIG. 4

210

212

220_1  220_2  220_n

FIG. 5

FIG. 6

FIG. 7

a) 210 212 220_n
b) 210 212 220_n
c) 210 212 220_n
d) 210 212 220_n
e) 210 212 220_n

FIG. 8

Europäisches
Patentamt

European
Patent Office

Office européen
des brevets

# EUROPEAN SEARCH REPORT

Application Number

EP 10 00 1658

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2 935 127 A (STALEGO CHARLES J) 3 May 1960 (1960-05-03) | 1,2,4-11 | INV. F23C9/08 |
| Y | * column 1, line 65 - column 2, line 4 * * column 2, line 19 - line 28 * * column 4, line 9 - line 29 * * column 4, line 51 - line 71 * * figure 1 * | 13,14 | F23C9/00 F23D14/24 F23D14/56 |
| Y | WO 94/21963 A1 (NOVOTNY ANTON [AT]) 29 September 1994 (1994-09-29) * column 4, line 33 - column 5, line 33; figure 1 * | 13,14 | |
| X | EP 1 085 261 A1 (BALLARD GENERATION SYSTEMS INC [CA]) 21 March 2001 (2001-03-21) * paragraphs [0005], [0014], [0024], [0040]; claim 32; figure 8 * | 1,2,4,8, 11,12,15 | |
| X | US 3 578 793 A (JONES ROBERT D ET AL) 18 May 1971 (1971-05-18) * figures 1-3 * * column 2, line 73 - column 3, line 28 * * column 4, line 57 - line 73 * * column 5, line 21 - line 32 * | 1,2,4-6, 8,9,11 | TECHNICAL FIELDS SEARCHED (IPC) F23C F23D C01B B01J |
| X | US 3 905 751 A (HEMSATH KLAUS H ET AL) 16 September 1975 (1975-09-16) * figures 1,5 * * column 1, line 31 - line 44 * * column 1, line 66 - column 2, line 2 * * column 2, line 35 - line 56 * * column 9, line 26 - line 28 * | 1-4 | |

-/--

The present search report has been drawn up for all claims

| Place of search | Date of completion of the search | Examiner |
|---|---|---|
| The Hague | 12 August 2010 | Mougey, Maurice |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

**EUROPEAN SEARCH REPORT**

Application Number

EP 10 00 1658

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 645 412 A (BESIK FERDINAND K [CA]) 8 July 1997 (1997-07-08) | 1,2,4 | |
| A | * figures 1,2 * * column 3, line 32 - line 55 * * column 4, line 25 - line 39 * ----- | 13 | |
| X | GB 551 568 A (JOSEPH SAMUEL LOWE) 1 March 1943 (1943-03-01) * figure 1 * * page 1, line 80 - page 2, line 10 * ----- | 1-4,8-11 | |

TECHNICAL FIELDS
SEARCHED (IPC)

The present search report has been drawn up for all claims

| Place of search | Date of completion of the search | Examiner |
|---|---|---|
| The Hague | 12 August 2010 | Mougey, Maurice |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................................
& : member of the same patent family, corresponding
document

EPO FORM 1503 03.82 (P04C01)

**ANNEX TO THE EUROPEAN SEARCH REPORT
ON EUROPEAN PATENT APPLICATION NO.**   EP 10 00 1658

This annex lists the patent family members relating to the patent documents cited in the above-mentioned European search report.
The members are as contained in the European Patent Office EDP file on
The European Patent Office is in no way liable for these particulars which are merely given for the purpose of information.

12-08-2010

| Patent document cited in search report | | Publication date | Patent family member(s) | | | Publication date |
|---|---|---|---|---|---|---|
| US 2935127 | A | 03-05-1960 | NONE | | | |
| WO 9421963 | A1 | 29-09-1994 | AT | 154427 | T | 15-06-1997 |
| | | | DE | 59403095 | D1 | 17-07-1997 |
| | | | EP | 0642645 | A1 | 15-03-1995 |
| EP 1085261 | A1 | 21-03-2001 | CA | 2318687 | A1 | 13-03-2001 |
| US 3578793 | A | 18-05-1971 | BE | 732375 | A | 30-10-1969 |
| | | | DE | 1924812 | A1 | 25-06-1970 |
| | | | FR | 2009535 | A1 | 06-02-1970 |
| | | | GB | 1273629 | A | 10-05-1972 |
| | | | JP | 49031165 | B | 20-08-1974 |
| US 3905751 | A | 16-09-1975 | CA | 1034479 | A1 | 11-07-1978 |
| | | | JP | 50130031 | A | 14-10-1975 |
| US 5645412 | A | 08-07-1997 | NONE | | | |
| GB 551568 | A | 01-03-1943 | NONE | | | |

EPO FORM P0459

For more details about this annex : see Official Journal of the European Patent Office, No. 12/82